# EUROPÄISCHE PATENTSCHRIFT

(11) **EP 4 354 044 B1**
(45) Veröffentlichungstag und Bekanntmachung des Hinweises auf die Patenterteilung: **24.12.2025**
(21) Anmeldenummer: 23201791.3
(22) Anmeldetag: 05.10.2023
(51) Int. Cl.: B29C 55/12, F24H 9/20, B29C 55/28

(54) **FOLIENRECKANLAGE MIT EINEM SOLARTHERMISCHEN PROZESS-TEMPERIERUNGSSYSTEM**
FILM STRETCHING INSTALLATION WITH A SOLAR THERMAL PROCESS TEMPERING SYSTEM
INSTALLATION D'ÉTIRAGE DE FILM AVEC SYSTÈME DE CONTRÔLE DE LA TEMPÉRATURE PAR PROCÉDÉ THERMIQUE SOLAIRE

(30) Priorität: 14.10.2022 DE 102022126925
(43) Veröffentlichungstag der Anmeldung: 17.04.2024
(73) Patentinhaber: Brückner Maschinenbau GmbH, 83313 Siegsdorf (DE)
(72) Erfinder: Dürr, Benjamin, 83278 Traunstein (DE); Weidacher, Quirin, 83278 Traunstein (DE)
(74) Vertreter: Flach Bauer & Partner Patentanwälte mbB

(56) Entgegenhaltungen:
- WO-A2-2012/110328
- CN-U- 205 202 225
- DE-U1- 202019 000 308

## Beschreibung

### Gebiet der Erfindung

Die vorliegende Erfindung betrifft eine Folienreckanlage umfassend ein solarthermisches Prozess-Temperierungssystem.

### Hintergrund

Die Folienherstellung und insbesondere der Betrieb von Folienreckanlagen im industriellen Maßstab ist mit einem hohen energetischen Umsatz verbunden.

Zur Folienherstellung wird ein Ausgangsmaterial, typischerweise zumindest ein Polymer, in Granulat- und/oder Pulver-Form bereitgestellt und in mehreren Prozessschritten, welche typischerweise unterschiedliche Temperaturniveaus aufweisen, in eine Folie, beispielsweise eine biaxial orientierte Folie, umgewandelt.

Die größten Energiekonsumenten innerhalb dieses Folienherstellungsprozesses sind üblicherweise die Trocknung des polymeren Ausgangsmaterials (z.B. Granulats und/oder Pulver), die Extrusion, sowie das mono- oder biaxiale-Verstrecken. Das Verstrecken erfolgt beispielsweise mittels einer Längsreckanlage (auch als MDO (Machine Direction Orienter) bezeichnet), einer Querreckanlage (auch als TDO (Transverse Direction Orienter) bezeichnet) oder einer Simultanreckanlage, in der die Folie zeitgleich in Quer- und Längsrichtung verstreckt wird.

Bei der Folienherstellung wird das Ausgangsmaterial (Granulat und/oder Pulver) üblicherweise zunächst einem (oder mehreren) Extruder(n) zugeführt. Ein typischer Extruder umfasst einen temperierbaren (beheizbaren) Zylinder, in dem sich eine oder zwei Plastifizierschnecke(n) drehen kann bzw. können. Die Aufgabe der Schnecke(n) ist es, das Kunststoffgranulat (bzw. das -Pulver) sowie die stromabwärts entstehende Kunststoffschmelze zu fördern, das Ausgangsmaterial über Scherung (Reibung) aufzuschmelzen und zu homogenisieren sowie ausreichend Druck aufzubauen, um die Kunststoffschmelze sodann unter Druck kontinuierlich durch eine formgebende Öffnung (Extrusionswerkzeug) zu drücken. Abhängig von der Art der Folienherstellung können unterschiedliche Extrusionswerkzeuge verwendet werden.

Bei der Blasfolienherstellung (Blasfolienanlage) wird die Kunststoffschmelze nach dem Extruder beispielsweise durch ein (temperiertes) Werkzeug mit Ringdüse gedrückt. Der entstehende Schmelzeschlauch wird mit Luft aufgeblasen und durch (definiert temperierte) Kühlluft von außen und ggf. von innen gekühlt. Der abgekühlte Folienschlauch wird flachgelegt und anschließend aufgewickelt.

Bei der Flachfolienherstellung (auch als Flachfolienextrusion bezeichnet) wird die Kunststoffschmelze nach dem Extruder typischerweise mittels einer (temperierten) Breitschlitzdüse zu einer flachen Folie ausgeformt. Die mittels der Breitschlitzdüse geformte Folie (auch als Cast-Folie bezeichnet) kann beispielsweise auf eine Kühlwalze extrudiert werden und anschließend verstreckt werden.

Grundsätzlich kann eine Folie sequenziell oder simultan Verstreckt werden. Bei der sequentiellen Verstreckung wird die Folie beispielsweise zuerst in Längsrichtung verstreckt und anschließend in Querrichtung. Bei der simultanen Verstreckung erfolgt das Verstrecken in Längs- und Querrichtung zeitgleich.

Die Längsverstreckung (MDO-Schritt) der Kunststofffolie, umfasst typischerweise das Temperieren der extrudierten Kunststoffbahn und das Führen der (Cast-)Folie über (temperierte) Walzen. Durch die Walzen, die mit unterschiedlichen Geschwindigkeiten rotieren, kann die Kunststoffbahn in Längsrichtung verstreckt (gereckt) werden.

Die sich im Falle der sequentiellen Verstreckung anschließende Querverstreckung (TDO-Schritt) der Kunststofffolie, umfasst typischerweise das Temperieren der extrudierten Kunststoffbahn (in einem Ofen) und das anschließende Verstrecken in Querrichtung. Hierzu wird die Folie typischerweise eingekluppt und sodann in die Breite gezogen (gereckt). Die biaxial verstreckte Folie kann dann aufgewickelt werden.

Bei der simultanen Verstreckung wird die extrudierte Folie zunächst temperiert und anschließend beispielsweise in eine Simultanreckanlage (z.B. ein Simultanreckofen) geführt. In der Simultanreckanlage wird die Folie typischerweise eingekluppt und sodann in die Breite und die Länge gezogen (gereckt).

In den jeweiligen Öfen, wie sie bei der Quer- und Simultanverstreckung üblicherweise genutzt werden, wird die zu reckende Folie vor dem Reckvorgang erwärmt und auch beim und während des Reckvorgangs auf einer vorbestimmten Temperatur gehalten. Anschließend kann die gereckte Folie im Ofen gekühlt werden.

Besonders für die Simultan-, Längs- und Querverstreckung muss viel thermische Energie bereitgestellt werden. Derzeit bestehen für deren Bereitstellung verschiedene Erzeugungskonzepte (z.B. elektrische Beheizung, Beheizung über Thermalöl, Wärmezufuhr über Gasbrenner, und dergleichen). Bei der Nutzung von Thermalöl wird das Thermalöl über ein Heizsystem, wie beispielsweise einen Öl-, Gas- oder Kohlekessel, temperiert. D.h. nach wie vor sind überwiegend fossile Energieträger (Kohle, Gas, Öl, ...) beteiligt, woraus ein ungünstiger CO₂e-Fußabdruck der hergestellten Folie resultiert.

CN 205 202 225 U betrifft ein Boiler-System für die Gummiverarbeitung. Das System umfasst einen Gas-Wärmeleitungs-Ölofen, einen Energiespeicher und einen Solarkollektor.

Aus WO 2012/110 328 A2 ist ein Verfahren zum Betrieb eines direkt beheizten, solarthermischen Dampferzeugers und aus DE 20 2019 000 308 U1 eine Solar-Wind-Hybridanlage bekannt.

Aufgabe der vorliegenden Erfindung ist es daher die vorgenannten Nachteile auszuräumen und die Nutzung fossiler Energieträger zur Folienherstellung zu verringern, oder gar zu vermeiden. Insbesondere sollen CO₂e-Emmissionen eingespart werden.

### Beschreibung der Erfindung

Die Aufgabe wird gelöst durch eine Folienreckanlage nach Anspruch 1. Weitere Aspekte der Erfindung sind Teil der Unteransprüche.

Insbesondere wird die Aufgabe durch ein eine Folienreckanlage gelöst, welche ein solarthermisches Prozess-Temperierungssystem umfasst. Das Prozess-Temperierungssystem umfasst zumindest einen Solar-Wärmeerzeuger, welcher in einem Wärmeerzeugungskreislauf eingebunden ist, wobei der Wärmeerzeugungskreislauf ein erstes Wärmetransportfluid führt.

Der Solar-Wärmeerzeuger wandelt Sonnenenergie in nutzbare thermische Energie um. Insbesondere umfasst der zumindest eine Solar-Wärmeerzeuger solarthermische Kollektoren, die die auftreffende Strahlung bündeln (z.B. Concentrated-Solar-Power-CSP-Systeme), um das erste Wärmetransportfluid auf möglichst hohe Temperaturen aufzuheizen.

Beispielsweise kann der Solar-Wärmeerzeuger das erste Wärmetransportfluid auf zumindest 250°C, auf zumindest 300°C, auf zumindest 400°C, auf zumindest 450°C, auf zumindest 500°C oder auf zumindest 550°C heizen. Weiterhin umfasst das Prozess-Temperierungssystem zumindest einen Wärmespeicher. Dem Wärmespeicher kann über den ersten Wärmeerzeugungskreislauf thermische Energie zugeführt werden, die durch den zumindest einen Solar-Wärmeerzeuger erzeugt wurde. Der Wärmespeicher ist also dazu eingerichtet, die thermische Energie zu speichern.

Abhängig von der Bauart, dem verwendeten Speichermedium und der Größe des Wärmespeichers und der thermischen Isolation des Wärmespeichers, kann der Wärmespeicher als Kurzzeitwärmespeicher und/oder als Langzeitwärmespeicher genutzt werden. Ein Kurzzeitwärmespeicher ermöglicht die Speicherung einer Wärmemenge zur sonnenunabhängigen Beheizung des/der Verbraucher über wenige Minuten bis hin zu einer Stunde. Mittels eines Langzeitwärmespeicher kann der/die Verbraucher auch über mehrere Stunden (beispielsweise zumindest 2 Stunden, zumindest 3 Stunden, zumindest 4 Stunden, zumindest 5 Stunden, zumindest 6 Stunden, zumindest 7 Stunden, zumindest 8 Stunden, zumindest 9 Stunden, zumindest 10 Stunden, zumindest 11 Stunden, oder zumindest 12 Stunden) sonnenunabhängig beheizt werden.

Das Speichermedium, welches der Wärmespeicher nutzt kann das erste Wärmetransportfluid sein (direkte Speicherung) oder ein Zwischenkreis-Wärmetransportfluid (indirekte Speicherung). Ebenso können andere Speichermedien zum Einsatz kommen.

Das Prozess-Temperierungssystem umfasst weiterhin zumindest einen Wärmeverbraucherkreislauf, der ein zweites Wärmetransportfluid führt. Dieses zweite Wärmetransportfluid kann sich von dem ersten Wärmetransportfluid unterscheiden. Ebenso kann für das erste und das zweite Wärmetransportfluid das gleiche Wärmetransportfluid eingesetzt werden.

Der Wärmeverbraucherkreislauf ist an den zumindest einen Wärmespeicher angebunden, um gespeicherte thermische Energie entnehmen zu können.

Insbesondere kann der Wärmeverbraucherkreislauf einen Vorlaufabschnitt und einen Rücklaufabschnitt umfassen. wobei der/die Verbraucher zwischen dem Vorlaufabschnitt und dem Rücklaufabschnitt in den Wärmeverbraucherkreislauf eingebunden werden können, sodass die Temperatur des zweiten Wärmetransportfluides im Vorlaufabschnitt über der Temperatur des zweiten Wärmetransportfluides im Rücklaufabschnitt liegt.

Das Prozess-Temperierungssystem umfasst weiterhin zumindest eine Temperaturregelungsvorrichtung. Die Temperaturregelungsvorrichtung umfasst zumindest einen Wärmetransportfluidausgang zur Versorgung des/der Verbraucher. Der Wärmetransportfluidausgang ist somit zwischen dem Vorlaufabschnitt und dem Rücklaufabschnitt angeordnet.

Die zumindest eine Temperaturregelungsvorrichtung ist dazu eingerichtet das zweite Wärmetransportfluid mit einer definierten Temperatur an den zumindest einen Wärmetransportfluidausgang (und somit den/die Verbraucher) bereitzustellen, um zumindest eine Komponente der Folienreckanlage mittelbar oder unmittelbar mit definiert temperiertem Wärmefluid zu versorgen. So kann die Folienreckanlage mit thermischer Energie versorgt werden.

Das Prozess-Temperierungssystem ermöglicht es also thermische Energie an die Folienreckanlage bereitzustellen, die mittels zumindest eines Solar-Wärmeerzeugers erzeugt wurde. Dies ermöglicht die Reduktion der CO₂e-Emissionen.

Das Prozess-Temperierungssystem kann weiterhin einen ersten Wärmetauscher umfassen. Dieser erste Wärmetauscher kann zwischen den zumindest einen Wärmespeicher und den Wärmeverbraucherkreislauf geschalten sein. Insbesondere kann der erste Wärmetauscher gesteuert und/oder geregelt sein, sodass die von dem Wärmespeicher an den Wärmeverbraucherkreislauf übertragene thermische Energie kontrolliert werden kann. Beispielsweise kann der Zufluss- und/oder Abfluss (beispielsweise die Durchflussgeschwindigkeit, Durchflussmenge, ...) des Wärmetauschers gesteuert und/oder geregelt sein. Somit kann die Temperatur des zweiten Wärmetransportfluides im Vorlaufabschnitt des Wärmeverbraucherkreislaufs gesteuert/geregelt werden.

Das Prozess-Temperierungssystem kann weiterhin einen zweiten Wärmetauscher umfassen. Dieser zweite Wärmetauscher kann zwischen den zumindest einen Wärmespeicher und den Wärmeerzeugerkreislauf geschalten sein. Insbesondere kann der zweite Wärmetauscher gesteuert und/oder geregelt sein, sodass die von dem Wärmeerzeugerkreislauf an den Wärmespeicher übertragene thermische Energie kontrolliert werden kann. Beispielsweise kann der Zufluss- und/oder Abfluss (beispielsweise die Durchflussgeschwindigkeit, Durchflussmenge, ...) des zweiten Wärmetauschers gesteuert und/oder geregelt sein. Somit kann die Temperatur des Speichermediums im Wärmespeicher gesteuert/geregelt werden.

Insbesondere kann der Wärmespeicher in einen Zwischenkreislauf eingebunden sein, welcher ein Zwischenkreislauf-Wärmetransportfluid führt. Dieses Zwischenkreislauf-Wärmetransportfluid kann sich von dem ersten und/oder dem zweiten Wärmetransportfluid unterscheiden. Ebenso ist es möglich, dass für das erste Wärmetransportfluid und/oder das zweite Wärmetransportfluid und/oder das Zwischenkreislauf-Wärmetransportfluid das gleiche Wärmetransportfluid eingesetzt wird.

Werden unterschiedliche Wärmetransportfluide verwendet, können die Wärmetransportfluide an die jeweiligen Anforderungen angepasst werden. Für den Wärmespeicher kann beispielsweise ein Wärmetransportfluid mit sehr hoher spezifischer Wärmekapazität eingesetzt werden, um auf kleinem Raum möglichst viel Energie speichern zu können. Für den Wärmeerzeugungskreislauf und/oder den Wärmeverbraucherkreislauf können hingegen Wärmetransportfluide vorteilhaft sein, die eine geringere Viskosität aufweisen und mithin leichter zu den Wärmeerzeuger(n) und/oder den Verbrauchern gefördert werden können. Zudem können die Siedepunkte der Wärmetransportfluide an die jeweiligen Einsatztemperaturen angepasst sein.

So kann der zumindest eine Solar-Wärmeerzeuger dazu eingerichtet sein, das erste Wärmetransportfluid mit einer Temperatur von zumindest 250°C (oder zumindest 300°C, oder zumindest 400°C, oder zumindest 450°C, oder zumindest 500°C oder zumindest 550°C) an den Wärmespeicher oder den zweiten Wärmetauscher bereitzustellen. Das erste Wärmetransportfluid kann in diesem Fall ein Öl, oder eine Salzschmelze sein, deren Siedepunkt beispielsweise über den zuvor genannten Temperaturen liegt. Ebenso kann als Wärmetransportfluid Wasser zum Einsatz kommen, dass im Solar-Wärmeerzeuger unter Druck verdampft wird.

Das erste Wärmetransportfluid, das zweite Wärmetransportfluid und/oder das Zwischenkreislauf-Wärmetransportfluid kann aus einem der folgenden Wärmetransportfluide ausgewählt sein:
Wasser,
ein Thermalöl, oder
eine Salzschmelze,
wobei sich das erste Wärmetransportfluid, das zweite Wärmetransportfluid und/oder das Zwischenkreislauf-Wärmetransportfluid unterscheiden können. Typischerweise liegen die Wärmetransportfluide flüssig vor. Es können jedoch auch gasförmige (Dampf) Wärmetransportfluide, insbesondere in den Wärmeerzeuger(n) eingesetzt werden.

Der zumindest eine Wärmespeicher kann dazu eingerichtet sein, ein Wärmetransportfluid mit einer Temperatur von zumindest 180°C, oder von zumindest 210°C und insbesondere von zumindest 240°C zu speichern. Beispielsweise kann der Wärmespeicher dazu eingerichtet sein, Temperaturen im Bereich von 180°C bis 560°C, oder von 210°C bis 500°C, oder von 240°C bis 400°C zu speichern. Insbesondere ist die Temperatur des im Wärmespeicher gespeicherten Wärmetransportfluides abhängig von der Dimensionierung des Wärmespeichers (z.B. Volumen, geometrische Abmessung, Isolierung, ...), der Art des verwendeten Fluides und der Art des Wärmespeichers. Es versteht sich, dass die Temperatur im Wärmespeicher nicht gleichmäßig verteilt sein muss und insbesondere unterschiedliche Temperaturbereiche vorhanden sein können.

Insbesondere kann der Wärmespeicher ein Schichtspeicher sein. In einem solchen Schichtspeicher liegt das Speichermedium in Schichten mit unterschiedlicher Temperatur vor, wobei die Temperatur von oben nach unten abnimmt. Dieser Schichtspeicher kann so mit unterschiedlichen Temperaturniveaus an den Wärmeverbraucherkreislauf angebunden sein. Dies ermöglicht die Entnahme hoher Energiemengen, wenn diese benötigt werden.

Der zumindest eine Solar-Wärmeerzeuger kann einen linienkonzentrierenden Solar-Wärmeerzeuger umfassen, insbesondere zumindest einen Parabolrinnen-Kollektor und/oder zumindest einen Fresnel-Kollektor.

Bei Parabolrinnen-Kollektoren wird die solare Direktstrahlung mittels eines oder mehrerer Parabolspiegel, auf einen sich im Fokus des/der Parabolspiegel befindenden Receiver konzentriert.

Bei Fresnel-Kollektoren werden mehrere Primärspiegel so ausgerichtet, dass diese die solare Direktstrahlung auf einen zentral befestigten Receiver reflektieren. Um die Genauigkeitsanforderungen der Primärspiegel zu minimieren, kann ein Sekundärkonzentrator (beispielsweise ein Parabolspiegel) eingesetzt werden, welcher die von den Primärspiegeln reflektierten Solarstrahlen auf den Receiver bündelt.

Der in Parabolrinnen-Kollektoren oder Fresnel-Kollektoren eingesetzte Receiver umfasst beispielsweise ein Rohr, wie ein Stahlrohr, welches von einem evakuierten Glasrohr umhüllt sein kann, um die Wärmeverluste zu minimieren. Das Rohr führt das erste Wärmetransportfluid. Das Rohr kann zudem beschichtet sein. Die Beschichtung des Rohrs sorgt hierbei für eine hohe Absorption der Solarstrahlung, verbunden mit einem möglichst geringen Emissionsvermögen, um Wärmeverluste weiter zu minimieren. Das erreichbare Temperaturniveau des ersten Wärmetransportfluides liegt bei bis zu 550 °C, oder sogar höher.

Der zumindest eine Solar-Wärmeerzeuger kann ein nachgeführter Wärmeerzeuger sein, der zumindest eine Wärmeerzeuger kann also dem aktuellen Sonnenstand nachgeführt werden. Hierzu kann eine Steuerung vorgesehen sein, welche den aktuellen Sonnenstand selbst ermittelt, oder entsprechende Daten erhält. Basierend auf dem aktuellen Sonnenstand können dann Aktuatoren angesteuert werden, die die Nachführung des/der Solar-Wärmeerzeuger bewirken. Insbesondere kann der zumindest eine Solar-Wärmeerzeuger eine einachsige Nachführung umfassen.

Bei Parabolrinnen-Kollektoren, können für eine einachsige Nachführung der/die Parabolspiegel einachsig über einen Stellmotor nachgeführt werden. Hierdurch wird eine hohe Energieausbeute, bei geringerem konstruktivem Aufwand ermöglicht. Bei Fresnel-Kollektoren kann die Nachführung über die in ihrer Stellung veränderlichen Primärspiegel erfolgen. Insbesondere können mehrere Primärspiegel zu Gruppen gruppiert und sodann gruppenweise nachgeführt werden, um den regelungstechnischen Aufwand zu minimieren.

Weiterhin kann das Prozess-Temperierungssystem zumindest eine Pumpe umfassen. Diese Pumpe(n) kann/können derart in das Prozess-Temperierungssystem eingebunden sein, um ein erstes Wärmetransportfluid, ein zweites Wärmetransportfluid und/oder Zwischenkreislauf-Wärmetransportfluide umzuwälzen. Durch die Ansteuerung der Pumpe(n) kann die Fließgeschwindigkeit der Wärmetransportfluide in den jeweiligen Kreisläufen gesteuert/geregelt werden. Somit kann auch die Menge an übertragener thermischer Energie gesteuert/geregelt werden.

Insbesondere kann die Temperaturregelungsvorrichtung dazu eingerichtet sein, Wärmetransportfluid des Vorlaufabschnitts mit kälterem Wärmetransportfluid, beispielsweise aus dem Rücklaufabschnitt, zu mischen, um das zweite Wärmetransportfluid mit einer definierten Temperatur an den zumindest einen Wärmetransportfluidausgang bereitzustellen. Weiterhin oder alternativ kann die Temperaturregelungsvorrichtung dazu eingerichtet sein zumindest eine Pumpe des Prozess-Temperierungssystems anzusteuern, um die Fließgeschwindigkeit des entsprechenden Wärmetransportfluides in dem der Pumpe zugeordneten Kreislauf zu steuern und /oder zu regeln. Durch die Ansteuerung der Pumpe(n) kann das zweite Wärmetransportfluid mit einer definierten Temperatur an den zumindest einen Wärmetransportfluidausgang bereitgestellt werden.

Hierzu kann zumindest eine ansteuerbare Pumpe in dem Wärmeerzeugungskreislauf, und/oder zumindest eine ansteuerbare Pumpe in dem Zwischenkreislauf und/oder zumindest eine ansteuerbare Pumpe in dem Wärmeverbraucherkreislauf angeordnet sein.

Weiterhin kann das Prozess-Temperierungssystem zumindest eine Zusatzheizvorrichtung umfassen. Diese zumindest eine Zusatzheizvorrichtung kann dem Wärmeverbraucherkreislauf, insbesondere dem Vorlaufabschnitt und/oder dem Wärmespeicher zugeordnet sein. Die Zusatzheizvorrichtung kann Schwankungen, insbesondere natürlich auftretende Schwankungen (Tag/Nacht, Wetter, ...), der solarthermischen Wärmeerzeugung ausgleichen, und/oder das Temperaturniveau auf ein benötigtes Temperaturniveau anheben.

Die Zusatzheizvorrichtung kann eine elektrische Zusatzheizvorrichtung sein, oder auf anderen Energieträgern, wie Kohle, Öl, Gas, Pellets, Hackschnitzel und/oder dergleichen basieren. Ist die Zusatzheizvorrichtung beispielsweise dem Wärmespeicher zugeordnet, kann diese ein elektrisches Heizschwert sein, welches das entsprechende Wärmetransportfluid unmittelbar temperiert.

Weiterhin kann das Prozess-Temperierungssystem zumindest einen Vorlaufverteiler, der dem zumindest einen Verbraucherausgang nachgeschalten ist, umfassen. Dieser Vorlaufverteiler ist dazu eingerichtet das zweite Wärmetransportfluid an unterschiedliche Verbraucher einer Folienreckanlage zu verteilen. Somit können unterschiedliche Verbraucher, wie Extruder, Längsreckanlage (MDO), Querreckanlage (TDO) und/oder dergleichen mit thermischer Energie versorgt werden.

Zudem kann das Prozess-Temperierungssystem zumindest einen Rücklaufsammler und eine Verteilvorrichtung umfassen. Der Rücklaufsammler nimmt das rücklaufende zweite Wärmetransportfluid von zumindest einem Verbraucher auf und stellt dieses an die Verteilvorrichtung bereit. Die Verteilvorrichtung ist dazu eingerichtet, das Wärmetransportfluid an den Wärmespeicher, an den ersten Wärmetauscher und/oder an die Temperaturregelungsvorrichtung bereitzustellen. Die Verteilvorrichtung kann statisch sein. Ebenso kann die Verteilvorrichtung gesteuert und/oder geregelt sein, um die entsprechenden Volumenströme zu steuern/zu regeln. Hierzu können entsprechende Ventile bereitgestellt sein.

Die erfindungsgemäße Folienreckanlage, welche das zuvor beschriebene Prozess-Temperierungssystem umfasst, umfasst weiterhin zumindest eine der folgenden Komponenten:
- eine Trocknungseinrichtung, zur Trocknung von Ausgangsmaterial, wie Polymergranulat und/oder Polymerpulver;
- einen Einfülltrichter, welcher temperiert sein kann und dazu dient das Ausgangsmaterial für die Folienherstellung an einen Extruder bereitzustellen;
- einen Extruder, welcher temperiert sein kann und welcher das Ausgangsmaterial plastifiziert und als Kunststoffbahn bzw. (Cast-)Folie an eine Kühlwalze abgibt;
- eine Blasfolienanlage, welche temperiert sein kann und welche dazu eingerichtet ist, eine Blasfolie herzustellen;
- eine Kühlwalze, welche temperiert sein kann und welche dazu eingerichtet ist die extrudierte Kunststoffbahn (Cast-Folie) zu temperieren;
- eine Längsreckanlage, welche temperiert sein kann und welche dazu eingerichtet ist, eine extrudierte Kunststoffbahn und/oder eine Blasfolie in Längsrichtung zu verstrecken;
- eine Querreckanlage, welche temperiert sein kann und welche dazu eingerichtet ist, eine extrudierte Kunststoffbahn und/oder eine Blasfolie in Querrichtung zu verstrecken;
- eine Simultanreckanlage, welche temperiert sein kann und welche dazu eingerichtet ist, eine extrudierte Kunststoffbahn und/oder eine Blasfolie simultan in Längs- und Querrichtung zu verstrecken;
- eine Folienabzugsvorrichtung, welche temperiert sein kann und welche dazu eingerichtet ist, eine Foliendicke zu ermitteln und/oder die Folie einer Oberflächenbehandlung zu unterziehen,
- eine Wicklungsvorrichtung, welche temperiert sein kann und die dazu eingerichtet ist, die Folie in Rollen aufzuwickeln und/oder
- eine Absorptionskältemaschine, für die Prozesstemperierung, insbesondere für die Prozesskühlung.

Die Folienreckanlage ist dabei so eingerichtet, dass zumindest eine der Komponenten mittelbar oder unmittelbar mittels des Prozess-Temperierungssystems mit thermischer Energie versorgt werden kann, um definiert temperiert zu werden. Es versteht sich, dass die oben genannten Komponenten der Folienreckanlage als solche temperiert sein können und/oder entsprechende Unterbaugruppen (wie Walzen, Gehäuse, Gehäuseabschnitte, und/oder dergleichen) davon temperiert sein können.

Somit kann die Folienreckanlage, jedenfalls aber zumindest eine Komponente (bzw. Unterbraugruppe der Komponente) der Folienreckanlage mit solar erzeugter thermischer Energie versorgt werden, sodass bis dato notwendige fossile Energieträger substituiert werden können. Dies führt zu einer Verbesserung der CO₂e-Emmisions-Bilanz der Folienherstellung.

Beispielhafte Unterbaugruppen der Komponenten sind temperierte Walzen, temperierte Gehäuse, temperierte Gehäuseabschnitte und dergleichen. Die Unterbaugruppen können unmittelbar (direkt) oder mittelbar (indirekt) mit Wärmetransportfluid bzw. thermischer Energie versorgt werden.

Insbesondere kann zumindest eine der Komponenten der Folienreckanlage mit dem Wärmetransportfluidausgang verbunden sein, um unmittelbar mit Wärmetransportfluid versorgt zu werden. Bei der direkten Versorgung kann das Wärmetransportfluid vom Wärmetransportfluidausgang direkt an die jeweilige Komponente (bzw. eine Unterbaugruppe davon) geleitet werden. Beispielsweise kann eine Walze, die die Folie führt von dem Wärmetransportfluid durchströmt und mithin temperiert werden.

Beispielhafte Walzen sind die Kühlwalze, Walze(n), die der Längsreckanlage zugeordnet sind (wie Vorheizwalze(n), Reckwalze(n), Annealing-Walze(n), und oder dergleichen), Walze(n) der Folienabzugsvorrichtung und/oder Walze(n) der Wicklungsvorrichtung.

Ebenso können Teile der Trocknungseinrichtung (insbesondere ein Gehäuseteil und/oder ein Mischer, ...), der Einfülltrichter, der Extruder (insbesondere eine Schnecke und/oder ein Zylinder, oder ein anderes Gehäuseteil), Gehäuse(teile) der Reckanlage(n) und/oder die Absorptionskältemaschine unmittelbar von temperierten Wärmetransportfluid durchströmt werden.

Bei der indirekten Versorgung wird das Wärmetransportfluid einem der jeweiligen Komponente (bzw. Unterbaugruppe) zugeordneten Wärmetauscher zugeführt. Beispielsweise kann zur Temperierung eines Gehäuses oder Gehäuseabschnitts einer Komponente (insbesondere Längs-, Quer- und/oder Simultanreckanlage), das Wärmetransportfluid durch einen Wärmetauscher geführt werden, welcher mit einem Temperierungsmedium (wie Luft) überstrichen oder durchströmt wird. Dieses Temperierungsmedium kann dann in das zu temperierende Gehäuse bzw. den Gehäuseabschnitt eingeleitet werden.

Insbesondere kann die Folienreckanlage einen oder mehrere Düsenkästen umfassen, mittels welchem Luft in unterschiedliche Temperaturzonen bzw. Gehäuseabschnitte der Reckanlage eingeblasen wird. Derartige Düsenkästen werden insbesondere als Unterbaugruppen von Querreckanlagen und/oder Simultanreckanlagen verwendet, um dort eine möglichst exakte Temperierung der Folie zu erreichen. Dieser zumindest eine Düsenkasten kann mittels des von dem Prozess-Temperierungssystem bereitgestellten Wärmetransportfluides temperiert werden.

Die Folienreckanlage kann weiterhin zumindest eine Zusatzheizvorrichtung umfassen, wobei die Zusatzheizvorrichtung dazu eingerichtet ist, zumindest eine der Komponenten der Folienreckanlage mit zusätzlicher thermischer Energie zu versorgen.

Die Zusatzheizvorrichtung kann Schwankungen, insbesondere natürlich auftretende Schwankungen (Tag/Nacht, Wetter, ...), der solarthermischen Wärmeerzeugung ausgleichen, und/oder das Temperaturniveau der jeweiligen Komponente auf ein benötigtes Temperaturniveau anheben. Zudem ermöglicht diese Zusatzheizvorrichtung, ein thermisches Grundniveau mittels des Prozess-Temperierungssystems bereitzustellen. Werden an einer (oder mehreren) Komponente höhere Temperaturen benötigt, kann die Zusatzheizvorrichtung die zusätzlich benötigte thermische Energie bereitstellen, um das benötigte Temperaturniveau zu erreichen und/oder zu halten.

Die Aufgabe wird ferner durch die Verwendung des zuvor beschriebenen Prozess-Temperierungssystems in einer zuvor beschriebenen Folienreckanlage gelöst, wobei das Prozess-Temperierungssystem zumindest eine der Komponenten der Folienreckanlage (insbesondere eine Unterbaugruppe davon) mittelbar oder unmittelbar mit thermischer Energie versorgt, um diese definiert zu temperieren.

### Kurzbeschreibung der Figuren

Die beigefügten Figuren zeigen Aspekte der vorliegenden Erfindung. Insbesondere zeigt
- Fig. 1: eine schematische Darstellung eines Prozess-Temperierungssystem mit direkter Wärmespeicherung;
- Fig. 2: eine schematische Darstellung eines Prozess-Temperierungssystems mit direkter Wärmespeicherung;
- Fig. 3: eine schematische Darstellung eines Prozess-Temperierungssystems mit direkter Wärmespeicherung;
- Fig. 4: eine schematische Darstellung eines Prozess-Temperierungssystems mit indirekter Wärmespeicherung;
- Fig. 5: eine schematische Darstellung einer Folienreckanlage, und
- Fig. 6: eine schematische Darstellung einer Querreckanlage (TDO).

### Ausführliche Beschreibung der Figuren

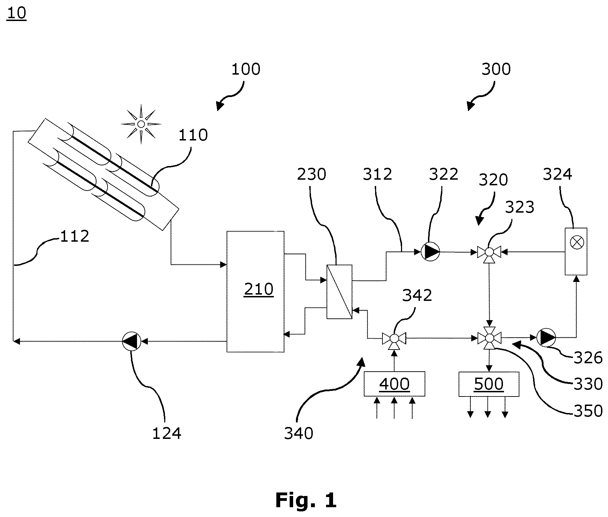

Insbesondere zeigt Fig. 1 eine schematische Darstellung eines Prozess-Temperierungssystem 10 mit direkter Wärmespeicherung.

Das Prozess-Temperierungssystems 10 umfasst einen Wärmeerzeugungskreislauf 100. In diesen Wärmeerzeugungskreislauf 100 ist ein Solar-Wärmeerzeuger 110, insbesondere ein konzentrierender CSP-Solarwärmeerzeuger, wie ein Parabolrinnen-Kollektor eingebunden. Dieser kann solare Strahlungsenergie in nutzbare thermische Energie wandeln. Ein erstes Wärmetransportfluid 112 wird hierzu in dem Wärmeerzeugungskreislauf 100 geführt und mittels des Solar-Wärmeerzeugers 110 beispielsweise auf ca. 550°C aufgeheizt. Eine Pumpe 124, welche dem Wärmeerzeugungskreislauf 100 zugeordnet ist, kann das erste Wärmetransportfluid 112 (beispielsweise Wasser, Wasserdampf, Thermalöl, Salzschmelze, ...) umwälzen.

Weiterhin umfasst das Prozess-Temperierungssystems 10 zumindest einen Wärmespeicher 210. Dem Wärmespeicher 210 kann über den Wärmeerzeugungskreislauf 100 thermische Energie zur Speicherung zugeführt werden, die durch den zumindest einen Solar-Wärmeerzeuger 110 erzeugt wurde. In der hier gezeigten Ausführungsform nimmt der Wärmespeicher 210 das erste Wärmetransportfluid 112 auf. Das Speichermedium ist mithin das erste Wärmetransportfluid, sodass die thermische Energie direkt gespeichert wird.

Über einen Wärmetauscher 230 ist ein Wärmeverbraucherkreislauf 300, der ein zweites Wärmetransportfluid 312 führt an den Wärmespeicher 210 angebunden. So kann aus dem Wärmespeicher 210 thermische Energie entnommen werden. Wärmetauscher 230 kann wie in Fig. 1 gezeigt außerhalb des Wärmespeichers angeordnet sein. Ebenso ist es möglich, den Wärmetauscher innerhalb des Wärmespeichers anzuordnen. Der Wärmetauscher kann beispielsweise ein Plattenwärmetauscher, ein Rohrwärmetauscher und/oder dergleichen sein. Dieser Wärmetauscher kann beispielsweise im Gleichstrom-, Gegenstrom- oder Querstrombetrieb betrieben werden.

Der Wärmeverbraucherkreislauf 300 umfasst einen Vorlaufabschnitt 320 und einen Rücklaufabschnitt 340, wobei die Temperatur des zweites Wärmetransportfluides 312 im Vorlaufabschnitt 320 höher ist als im Rücklaufabschnitt 340. Weiterhin umfasst der Wärmeverbraucherkreislauf 300 zumindest eine Temperaturregelungsvorrichtung 330. Diese Temperaturregelungsvorrichtung 330 weist zumindest einen Wärmetransportfluidausgang 350 auf, der mit einem Vorlaufverteiler 500 in Verbindung steht.

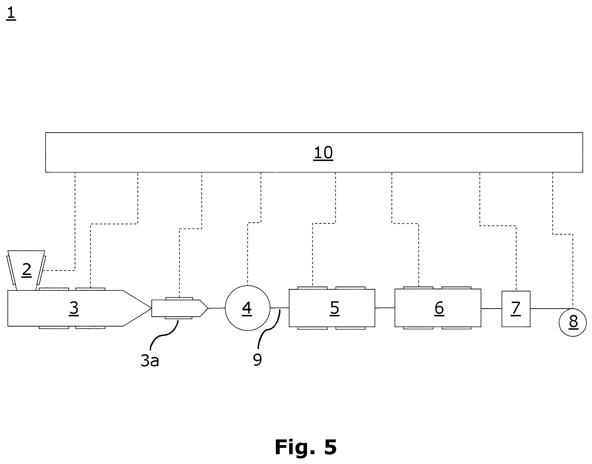

Dieser Vorlaufverteiler 500 ist dazu eingerichtet das zweite Wärmetransportfluid 312 an unterschiedliche Verbraucher (Komponenten) einer Folienreckanlage 1 (s. Fig. 5) zu verteilen. Somit können unterschiedliche Verbraucher, wie Extruder, Längsreckanlage (MDO), Querreckanlage (TDO) und dergleichen mit thermischer Energie versorgt werden. Soll nur ein Verbraucher mit Wärmetransportfluid 312 versorgt werden, kann dieser mit dem Wärmetransportfluidausgang 350 verbunden werden. Der Vorlaufverteiler 500 ist mithin optional. Entsprechend ist auch der Rücklaufsammler 400 optional, wenn z.B. das Wärmetransportfluid 312 von nur einem Verbraucher zurückgeleitet wird.

Um eine möglichst genaue Temperierung zu erreichen, ist die Temperaturregelungsvorrichtung 330 dazu eingerichtet, das zweite Wärmetransportfluid 312 des Vorlaufabschnitts 320 und das zweite Wärmetransportfluid 312 des Rücklaufabschnitts 340 so zu mischen, um das zweite Wärmetransportfluid 312 mit einer definierten Temperatur an den zumindest einen Wärmetransportfluidausgang 350 bereitzustellen.

Das Prozess-Temperierungssystem 10 aus Fig. 1 umfasst zudem zumindest einen Rücklaufsammler 400 und eine Verteilvorrichtung 342. Der Rücklaufsammler 400 nimmt das rücklaufende zweite Wärmetransportfluid 312 von zumindest einem Verbraucher der Folienreckanlage auf und stellt dieses an die Verteilvorrichtung 342 bereit. Die Verteilvorrichtung 342 stellt sodann das rücklaufende zweite Wärmetransportfluid 312 an den Wärmetauscher 230 bereit. Dort kann es wieder thermische Energie aus dem Wärmespeicher 210 aufnehmen und an den Vorlaufabschnitt 320 geleitet werden.

Insbesondere können im Wärmeverbraucherkreislauf 300 Pumpen 322, 326 vorgesehen sein, die das zweite Wärmetransportfluid 312 fördern bzw. umwälzen. Diese können ebenfalls mittels der Temperaturregelungsvorrichtung 330 steuer- oder regelbar sein.

Weiterhin kann das Prozess-Temperierungssystem 10 zumindest eine Zusatzheizvorrichtung 324 umfassen, die in den Wärmeverbraucherkreislauf 300 eingebunden ist. So kann zusätzliche thermische Energie bereitgestellt werden, sofern dies erforderlich ist. Über ein steuerbares Ventil 323 kann Wärmetransportfluid 312 zu der Zusatzheizvorrichtung 324 geleitet werden und so zusätzlich aufgeheizt werden. Das steuerbare Ventil 323 kann ein Proportionalventil sein, welches die Steuerung der Durchflussmenge erlaubt. Insbesondere kann das Ventil 323 mittels der Temperaturregelungsvorrichtung 330 gesteuert oder geregelt werden.

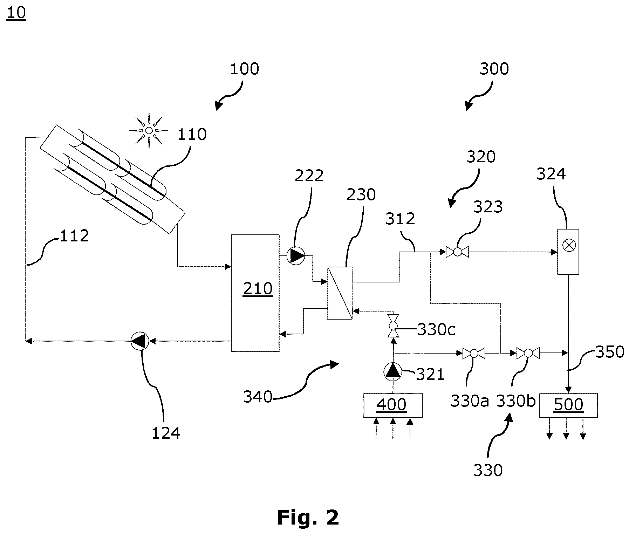

Fig. 2 zeigt eine schematische Darstellung eines weiteren Prozess-Temperierungssystems 10 mit direkter Wärmespeicherung. Dieses Prozess-Temperierungssystems 10 unterscheidet sich von dem in Fig. 1 gezeigten Prozess-Temperierungssystem 10 insbesondere in der Art des Aufbaus des Wärmeverbraucherkreislaufs 300.

Der Wärmeverbraucherkreislauf 300 des in Fig. 2 gezeigten Prozess-Temperierungssystems 10 umfasst einen Vorlaufabschnitt 320 und einen Rücklaufabschnitt 340, wobei die Temperatur des zweites Wärmetransportfluides 312 im Vorlaufabschnitt 320 höher ist als im Rücklaufabschnitt 340.

Weiterhin umfasst der Wärmeverbraucherkreislauf 300 zumindest eine Temperaturregelungsvorrichtung 330. Diese Temperaturregelungsvorrichtung 330 weist zumindest einen Wärmetransportfluidausgang 350 auf, der mit einem Vorlaufverteiler 500 in Verbindung steht.

Dieser Vorlaufverteiler 500 ist dazu eingerichtet das zweite Wärmetransportfluid 312 an unterschiedliche Verbraucher (Komponenten) einer Folienreckanlage 1 (s. Fig. 5) zu verteilen. Somit können unterschiedliche Verbraucher, wie Extruder, Längsreckanlage (MDO), Querreckanlage (TDO) und dergleichen mit thermischer Energie versorgt werden. Soll nur ein Verbraucher mit Wärmetransportfluid 312 versorgt werden, kann dieser mit dem Wärmetransportfluidausgang 350 verbunden werden. Der Vorlaufverteiler 500 ist mithin optional. Entsprechend ist auch der Rücklaufsammler 400 optional, wenn z.B. das Wärmetransportfluid 312 von nur einem Verbraucher zurückgeleitet wird.

Um eine möglichst genaue Temperierung zu erreichen, ist die Temperaturregelungsvorrichtung 330 dazu eingerichtet, das zweite Wärmetransportfluid 312 des Vorlaufabschnitts 320 und das zweite Wärmetransportfluid 312 des Rücklaufabschnitts 340 so zu mischen, um das zweite Wärmetransportfluid 312 mit einer definierten Temperatur an den zumindest einen Wärmetransportfluidausgang 350 bereitzustellen. Hierfür sind die Ventile 330a, 330b und 330c vorgesehen.

Zudem umfasst das Prozess-Temperierungssystem 10 aus Fig. 2 zumindest einen Rücklaufsammler 400. Der Rücklaufsammler 400 nimmt das rücklaufende zweite Wärmetransportfluid 312 von zumindest einem Verbraucher der Folienreckanlage auf und stellt dieses u.a. an das Ventil 330a und das Ventil 330c bereit. Über das Ventil 330c kann das rücklaufende zweite Wärmetransportfluid 312 an den Wärmetauscher 230 geleitet werden. Dort kann es wieder thermische Energie aus dem Wärmespeicher 210 aufnehmen und an den Vorlaufabschnitt 320 geleitet werden.

Die Ventile 330a, 330b und 330c können steuerbare Ventile sein, die von der Temperaturregelungsvorrichtung 330 gesteuert oder geregelt werden können. Insbesondere können die Ventile 330a, 330b und 330c Proportionalventile sein, welche die Steuerung der Durchflussmenge erlauben. Durch die gezielte Ansteuerung der Ventile 330a, 330b und 330c kann das Wärmetransportfluid 312 gemischt und an den Wärmetauscher 210 und/oder den Wärmetransportfluidausgang 350 mit definierter Temperatur bereitgestellt werden.

Insbesondere kann im Wärmeverbraucherkreislauf 300 eine Pumpe 321 vorgesehen sein, die das zweite Wärmetransportfluid 312 fördern bzw. umwälzen kann. Optional kann auch ein Pumpe 222 zwischen dem Wärmespeicher 210 und dem Wärmetauscher 230 zur Förderung des entsprechenden Wärmtransportfluides vorgesehen sein. Diese Pumpen 321, 222 können ebenfalls mittels der Temperaturregelungsvorrichtung 330 steuer- oder regelbar sein.

Weiterhin kann das Prozess-Temperierungssystem 10 zumindest eine Zusatzheizvorrichtung 324 umfassen, die in den Wärmeverbraucherkreislauf 300 eingebunden ist. So kann zusätzliche thermische Energie bereitgestellt werden, sofern dies erforderlich ist. Über ein steuerbares Ventil 323 kann Wärmetransportfluid 312 zu der Zusatzheizvorrichtung 324 geleitet werden und so zusätzlich aufgeheizt werden. Das steuerbare Ventil 323 kann ein Proportionalventil sein, welches die Steuerung der Durchflussmenge erlaubt. Insbesondere kann das Ventil 323 mittels der Temperaturregelungsvorrichtung 330 gesteuert oder geregelt werden.

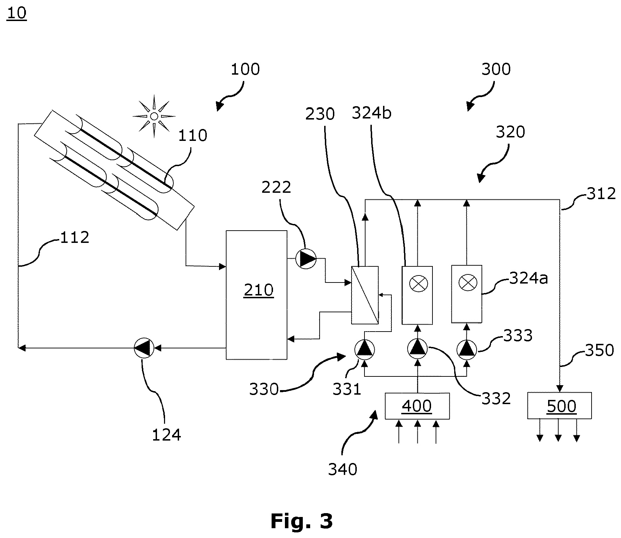

Fig. 3 zeigt eine schematische Darstellung eines weiteren Prozess-Temperierungssystems 10 mit direkter Wärmespeicherung. Dieses Prozess-Temperierungssystems 10 unterscheidet sich von den in den Fig. 1 und 2 gezeigten Prozess-Temperierungssystemen insbesondere in der Art des Aufbaus des Wärmeverbraucherkreislaufs 300.

Eine Pumpe 222 fördert Wärmetransportfluid aus dem Wärmespeicher 210 zu dem Wärmetauscher 230. Dem Wärmetauscher 230 ist eine Pumpe 331 vorgeschaltet. Weiterhin umfasst der Wärmeverbraucherkreislauf 300 mehrere (hier beispielsweise zwei) Zusatzheizvorrichtungen 324a, 324b, die parallel zu dem Wärmetauscher 230 geschalten sind. Den Zusatzheizvorrichtungen 324a, 324b ist jeweils eine Pumpe 332, 333 vorgeschaltet.

Ein Rücklaufsammler 400 nimmt das rücklaufende zweite Wärmetransportfluid 312 von zumindest einem Verbraucher der Folienreckanlage auf und stellt dieses an die Pumpen 331, 332, 333 bereit.

Diese Pumpen 222, 331, 332, 333 können mittels der Temperaturregelungsvorrichtung 330 angesteuert werden, um die Fließgeschwindigkeit des entsprechenden Wärmetransportfluides in dem der Pumpe zugeordneten Kreislauf zu steuern und /oder zu regeln. Mittels der Pumpe 222 kann die Fließgeschwindigkeit des dem Wärmespeicher 210 zugeordneten Wärmetransportfluides im Wärmetauscher 230 gesteuert/geregelt werden. Mittels der Pumpe 331 kann die Fließgeschwindigkeit des Wärmetransportfluides 312 im Wärmetauscher 230 gesteuert/geregelt werden. Somit kann über die Pumpe(n) 222 und/oder 331 die Menge der aus dem Speicher 210 entnommenen thermischen Energie gesteuert/geregelt werden.

Über die Pumpen 332 und 333 kann die Fließgeschwindigkeit des Wärmetransportfluides 312 in den Zusatzheizungen 324a, 324b gesteuert/geregelt werden. Somit kann auch hier die an das Wärmetransportfluid 312 übertragene thermische Energie gesteuert/geregelt werden.

Nach dem das Wärmetransportfluid 312 die Stränge der Zusatzheizung(en) 324a, 324b und/oder des Wärmetauschers 230 passiert hat werden die Stränge gemischt und dem Wärmetransportfluidausgang 350 bzw. dem Vorlaufverteiler 500 zugeführt. Wie bereits oben dargelegt, ist der Vorlaufverteiler 500 optional, und kann weggelassen werden, wenn nur ein Verbraucher mit Wärmetransportfluid 312 versorgt werden soll. Entsprechend ist auch der Rücklaufsammler 400 optional, wenn z.B. das Wärmetransportfluid 312 von nur einem Verbraucher zurückgeleitet wird.

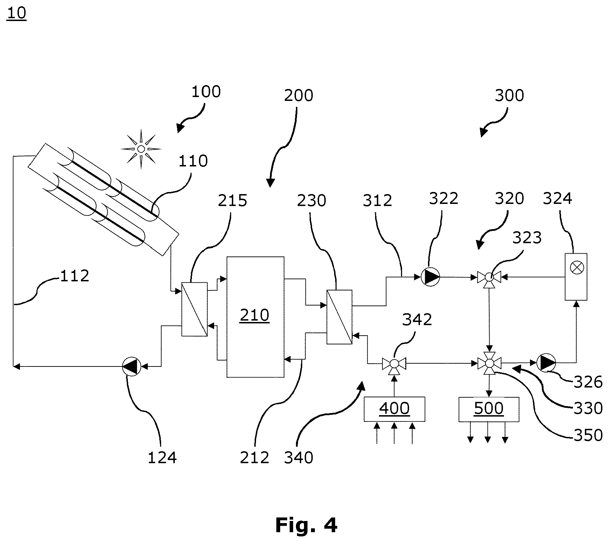

Fig. 4 zeigt eine schematische Darstellung eines Prozess-Temperierungssystems 10 mit indirekter Wärmespeicherung. Dieses Prozess-Temperierungssystems 10 unterscheidet sich von dem in Fig. 1 gezeigten Prozess-Temperierungssystem 10 insbesondere in der Art, wie der Wärmespeicher 210 in das Prozess-Temperierungssystems 10 eingebunden ist. In dem in Fig. 4 gezeigten System wird das erste Wärmetransportfluid 212 nicht direkt in den Wärmespeicher 210 geleitet, sondern durch einen Wärmetauscher 215 geführt. Dieser Wärmetauscher 215 ist in einen Zwischenkreislauf 200 eingebunden, in den auch der Wärmespeicher 210 eingebunden ist. Der Zwischenkreislauf 200 führt ein Zwischenkreislauf-Wärmetransportfluid 212. Dieses Zwischenkreislauf-Wärmetransportfluid 212 kann sich von dem ersten Wärmetransportfluid 112 und/oder dem zweiten Wärmetransportfluid 312 unterscheiden.

Die von dem Solar-Wärmeerzeuger 110 erzeugte Energie wird zunächst an das erste Wärmetransportfluid 112 übergeben (im Solar-Wärmeerzeuger 110) und sodann im Wärmetauscher 215 zur Speicherung an das Zwischenkreislauf-Wärmetransportfluid 212 übertragen, um im Wärmespeicher 210 gespeichert zu werden (indirekte Speicherung).

Fig. 5 zeigt eine schematische Darstellung, in sehr vereinfachter Form, einer Folienreckanlage 1, welche zur biaxialen Verstreckung von Folie 9 eingerichtet ist. Diese Folienreckanlage 1 umfasst mehrere Komponenten, die die einzelnen Verfahrensschritte der Folienherstellung repräsentieren. Insbesondere ist die Folienreckanlage 1 zur sequentiellen biaxialen Verstreckung der Folie 9 eingerichtet.

Zunächst wird über eine Dosierung, umfassend einen Einfülltrichter 2 einem Extruder 3 das zu verarbeitende Ausgangsmaterial, d.h. ein Polymer (Granulat und/oder Pulver), bereitgestellt und im Extruder 3 aufgeschmolzen.

Die Polymerschmelze wird mittels einer Düseneinheit 3a (beispielsweise eine Breitschlitzdüse), welche dem/den Extruder(n) 3 nachgeschaltet ist auf eine Kühlwalze 4 aufgebracht und abgekühlt. Die hierbei entstehende Folie 9 wird anschließend mittels einer Längsreckanlage (MDO) 5in Maschinenrichtung, d.h. längs verstreckt. Material und prozessabhängig erfolgt diese Längsverstreckung in einem Temperaturbereich von etwa 80°C bis etwa 140°C.

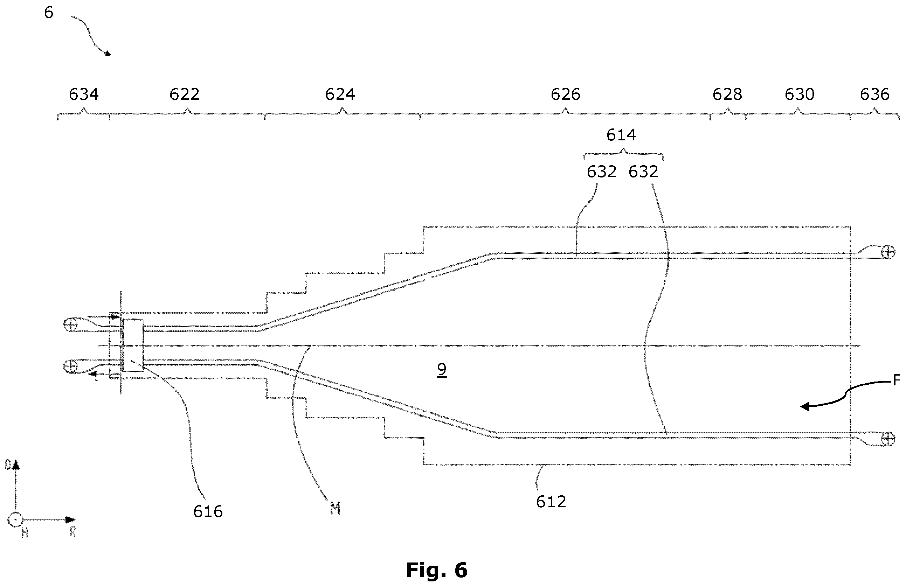

Anschließend wird die Folie in eine Querreckvorrichtung (TDO) 6 eingeführt und hier in Querrichtung verstreckt. Die Verstreckung ist mit Bezug auf Fig. 6 nochmals detailliert beschrieben. Material und prozessabhängig erfolgt diese Querverstreckung in einem Temperaturbereich von etwa 80°C bis etwa 200°C., wobei der Temperaturbereich zur Verstreckung materialabhängig ist. Für PA, PET und PP Folien liegt dieser Temperaturbereich bei etwa 80° - 200°C. Der Ofen der Querreckvorrichtung (TDO) kann hierbei höher temperiert sein, beispielsweise in einem Bereich von 80° bis 240°C.

Anschließend wir die Folie 9 mittels einer nachgeschalteten Folienabzugsvorrichtung 7 (sog. Pull Roll) aus dem Ofen gezogen und mittels der Wicklungsvorrichtung 8 anschließend aufgewickelt.

Ebenso kann die Verstreckung nicht sequenziell, sondern simultan erfolgen. Der Unterschied des simultanen zum sequentiellen Verstrecken liegt an der gleichzeitigen Verstreckung der Folien in Längs- und Querrichtung (MD- und TD-Richtung). Dies erfolgt in einer sogenannten Simultanreckanlage (z.B. ein Simultanreckofen). Die Simultanreckanlage temperiert und beschleunigt eine eingekluppte Folie derart, dass diese Folie gleichzeitig in Längs- und Querrichtung verstreckt wird. Eine gesonderte Längsreckanlage ist folglich nicht notwendig.

Mittels eines zuvor beschriebenen Prozess-Temperierungssystems 10 (s. Fig. 1, 2, 3 oder 4) können die einzelnen Komponenten (beispielsweise der Einfülltrichter 2, der Extruder 3, die Kühlwalze 4, die Längsreckanlage (MDO) 5, die Querreckanlage (TDO) 6, die Folienabzugsvorrichtung 7 und/oder die Wicklungsvorrichtung 8) temperiert werden. Somit kann Solarenergie zur Folienherstellung genutzt und der Einsatz fossiler Energieträger reduziert werden.

Das nachfolgende Beispiel verdeutlicht dies. Angenommen wird ein Solar-Wärmeerzeuger, der lineare Fresnel-Kollektoren umfasst. Bei einer Größe des Solar-Wärmeerzeugers von 5000 m² ergeben sich für eine durchschnittliche DNI (Direct Normal Irradiance) von 340 W/m² circa 3.520 MWh thermische Energie bei einem Temperaturniveau des Wärmetransportfluides von ca. 250 °C. Bei einem jährlichen thermischen Gesamtwärmebedarf von etwa 15.000 MWh für die TDO- und MDO-Vorrichtungen, welche derzeit durch den Energieträger Kohle bereitgestellt werden, entspricht dies 23 % oder 1,471 tCO2e.

Wie das vorstehende Beispiel zeigt, birgt der Einsatz von konzentrierter Solarthermie ein hohes Energieeinsparpotential bei der Wärmeerzeugung für eine Folienreckanlage.

Fig. 6 zeigt eine schematische Darstellung einer Querreckanlage (TDO). Denkbar ist auch, dass die Reckanlage eine Simultanreckanlage ist. Die Querreckanlage 6 weist einen Ofen 612, ein Transportsystem 614 sowie eine Ausgleichsvorrichtung 616 auf.

Der Ofen 612 hat eine Abzugsrichtung R, die der Bewegungsrichtung der zu reckenden Folie 9 entspricht. Quer zur Abzugsrichtung R und horizontal verläuft die Querrichtung Q des Ofens 612 und vertikal die Hochrichtung H.

Der Ofen 612 hat entlang der Abzugsrichtung R verschiedene Zonen zur Behandlung der zu reckenden Folie 9.

In der ersten Zone 622, auch Vorheizzone genannt, wird die Folie erwärmt. In der anschließenden zweiten Zone 624 ("Reckzone") wird die Folie in Querrichtung Q gereckt, sodass sie zum Ende der zweiten Zone 624 eine größere Breite aufweist als zu Beginn.

Nach erfolgter Reckung durchläuft die Folie 9 dann die dritte Zone 626 ("Wärmebehandlungszone", "Weiterheizzone" und/oder "Annealingzone" genannt), bei der eine Relaxierung der Folie 9 bei hohen Temperaturen erfolgen kann.

Anschließend verläuft die Folie 9 durch eine vierte Zone 628 und eine fünfte Zone 630 ("Kühlzone"), wobei die Folie in der fünften Zone 630 abgekühlt wird.

Die vierte Zone 628 wird Neutralzone genannt und dient zur Trennung der dritten Zone 626 und der fünften Zone 630. Die Neutralzone ist beispielsweise ein leerer Raum ohne Belüftung.

Das Transportsystem 614 umfasst, in an sich bekannter Weise, zwei Transportschienen 632, die gegenüber einer Mittelebene M der Reckanlage 6 bzw. des Ofens 612 spiegelsymmetrisch angeordnet sind und die sich zumindest teilweise im Ofen 612 erstrecken.

In einer Einlaufzone 634 sowie einer Auslaufzone 636, in denen die zu reckende Folie der Reckanlage 6 zu- bzw. abgeführt wird, verlaufen die Transportschienen 632 außerhalb des Ofens 612.

Die Folie 9 wird in an sich bekannter Weise durch Kluppen (nicht dargestellt) des Transportsystems 614, die entlang der Transportschienen 632 geführt werden, gegriffen und in Abzugsrichtung R durch den Ofen 612 transportiert. Die Folie verläuft dabei in einer Folienlaufbahn F die im Ofen 612 durch das Transportsystem 614 definiert ist. Die Folienlaufbahn F schneidet die Mittelebene M.

Insbesondere die Zonen 634, 622, 624, 626, 628, 630 und 636 des Ofens 612 können mittels des Prozess-Temperierungssystems 10 definiert temperiert werden.

Zudem sind mehrere Düsenkästen (nicht dargestellt) in dem Ofen 612 angeordnet, die heiße (temperierte) Luft in Richtung der Folienbahn F fördern. Mittels der heißen Luft wird der Innenraum des Ofens, und somit die Folie 9 erwärmt, gekühlt, oder auf einer vorbestimmten Temperatur gehalten. Die Luft kann über geeignete Wärmetauscher der Querreckanlage mittels des Prozess-Temperierungssystems 10 temperiert werden.

### Bezugszeichenliste

- 1: Folienreckanlagen
- 2: Einfülltrichter
- 3: Extruder
- 4: Kühlwalze
- 5: Längsreckanlage (MDO)
- 6: Querreckanlage (TDO)
- 7: Folienabzugsvorrichtung
- 8: Wicklungsvorrichtung
- 9: Folie
- 10: Prozess-Temperierungssystem
- 100: Wärmeerzeugungskreislauf
- 110: Solar-Wärmeerzeuger
- 112: erstes Wärmetransportfluid
- 124: Pumpe
- 200: Zwischenkreislauf
- 210: Wärmespeicher (Pufferspeicher)
- 212: Zwischenkreislauf-Wärmetransportfluid
- 215: Wärmetauscher (Erzeugerseite)
- 222: Pumpe
- 230: Wärmetauscher (Verbraucherseite)

- 300: Wärmeverbraucherkreislauf
- 312: zweites Wärmetransportfluid
- 320: Vorlaufabschnitt
- 322: Pumpe
- 321: Pumpe
- 323: Ventil (für Zusatzheizung)
- 324: Zusatzheizvorrichtung
- 324a: Zusatzheizvorrichtung
- 324b: Zusatzheizvorrichtung
- 326: Pumpe
- 330: Temperaturregelungsvorrichtung
- 330a: Ventil
- 330b: Ventil
- 330c: Ventil
- 331: Pumpe
- 332: Pumpe
- 333: Pumpe
- 340: Rücklaufabschnitt
- 342: Verteilvorrichtung
- 350: Wärmetransportfluidausgang
- 400: Rücklaufsammler
- 500: Vorlaufverteiler

- 612: Ofen
- 614: Transportsystem
- 616: Ausgleichsvorrichtung
- 622: Vorheizzone
- 624: Reckzone
- 626: Wärmebehandlungszone, Weiterheizzone und/oder Annealingzone
- 628: Neutralzone
- 630: Kühlzone
- 632: Transportschiene
- 634: Einlaufzone
- 636: Auslaufzone

- H: Hochrichtung des Ofens 612
- Q: Querrichtung des Ofens 612
- R: Abzugsrichtung
- M: Mittelebene der Querreckanlage

## Patentansprüche

1. Folienreckanlage (1) umfassend
ein Prozess-Temperierungssystem (10) sowie zumindest eine der folgenden Komponenten:
eine Trocknungseinrichtung;
einen Einfülltrichter (2);
einen Extruder (3);
eine Blasfolienanlage;
eine Kühlwalze (4);
eine Längsreckanlage (5);
eine Querreckanlage (6);
einen Simultanreckanlage;
eine Folienabzugsvorrichtung (7),
eine Wicklungsvorrichtung (8), und/oder
eine Absorptionskältemaschine, wobei die Folienreckanlage (1) so eingerichtet ist, dass zumindest eine der Komponenten mittelbar oder unmittelbar mittels des Prozess-Temperierungssystem (10) mit thermischer Energie versorgt werden kann, um definiert temperiert zu werden, und wobei
**das Prozess-Temperierungssystem (10) ein** solarthermisches Prozess-Temperierungssystem ist, wobei das Prozess-Temperierungssystem (10) folgendes umfasst:
zumindest einen Solar-Wärmeerzeuger (110), welcher in einem Wärmeerzeugungskreislauf (100) eingebunden ist, wobei der Wärmeerzeugungskreislauf (100) ein erstes Wärmetransportfluid (112) führt;
zumindest einen Wärmespeicher (210), welchem über den ersten Wärmeerzeugungskreislauf (100) thermische Energie zugeführt werden kann, die durch den zumindest einen Solar-Wärmeerzeuger (110) erzeugt wurde, wobei der Wärmespeicher (210) dazu eingerichtet ist die thermische Energie zu speichern;
zumindest einen Wärmeverbraucherkreislauf (300), der ein zweites Wärmetransportfluid (312) führt, wobei
der Wärmeverbraucherkreislauf (300) an den Wärmespeicher (210) angebunden ist, um gespeicherte thermische Energie entnehmen zu können;
zumindest eine Temperaturregelungsvorrichtung (330), wobei die zumindest eine Temperaturregelungsvorrichtung (330) zumindest einen Wärmetransportfluidausgang (350) umfasst und dazu eingerichtet ist
das zweite Wärmetransportfluid mit einer definierten Temperatur an den zumindest einen Wärmetransportfluidausgang (350) bereitzustellen, um zumindest eine Komponente der Folienreckanlage (1) mittelbar oder unmittelbar mit definiert temperiertem Wärmefluid zu versorgen.

2. Die Folienreckanlage (1) nach Anspruch 1, wobei das Prozess-Temperierungssystem (10) weiterhin einen ersten Wärmetauscher (230) umfasst, der zwischen den zumindest einen Wärmespeicher (210) und den Wärmeverbraucherkreislauf (300) geschalten ist.

3. Die Folienreckanlage (1) nach einem der vorhergehenden Ansprüche, wobei das Prozess-Temperierungssystem (10) weiterhin einen zweiten Wärmetauscher (215) umfasst, der zwischen den zumindest einen Wärmespeicher (210) und den Wärmeerzeugerkreislauf (100) geschalten ist.

4. Die Folienreckanlage (1) nach Anspruch 2 und 3, wobei der Wärmespeicher (210) in einen Zwischenkreislauf (200) eingebunden ist, der ein Zwischenkreislauf- Wärmetransportfluid (212) führt.

5. Die Folienreckanlage (1) nach einem der vorstehenden Ansprüche, wobei der zumindest einen Solar-Wärmeerzeuger (110) dazu eingerichtet ist, das erste Wärmetransportfluid (112) mit einer Temperatur von zumindest 550°C an den Wärmespeicher (210) oder den zweiten Wärmetauscher (215) bereitzustellen.

6. Die Folienreckanlage (1) nach einem der vorstehenden Ansprüche, wobei das erste Wärmetransportfluid (112), das zweite Wärmetransportfluid (312) und/oder das Zwischenkreislauf- Wärmetransportfluid (212) aus einem der folgenden Wärmetransportfluide ausgewählt ist:
Wasser,
ein Thermalöl, oder
eine Salzschmelze, wobei
das erste Wärmetransportfluid (112), das zweite Wärmetransportfluid (312) und/oder das Zwischenkreislauf-Wärmetransportfluid (212) sich unterscheiden können.

7. Die Folienreckanlage (1) nach einem der vorstehenden Ansprüche, wobei der zumindest eine Wärmespeicher (210) dazu eingerichtet ist ein Wärmetransportfluid mit einer Temperatur von zumindest 180°C, oder von zumindest 210°C und insbesondere von zumindest 240°C zu speichern.

8. Die Folienreckanlage (1) nach einem der vorstehenden Ansprüche, wobei der zumindest einen Solar-Wärmeerzeuger (110) einen linienkonzentrierenden Solar-Wärmeerzeuger umfasst, insbesondere zumindest einen Parabolrinnen-Kollektor und/oder zumindest einen Fresnel-Kollektor.

9. Die Folienreckanlage (1) nach einem der vorstehenden Ansprüche, wobei der zumindest einen Solar-Wärmeerzeuger (110) ein nachgeführter Wärmeerzeuger ist, der zumindest eine einachsige Nachführung umfasst.

10. Die Folienreckanlage (1) nach einem der vorstehenden Ansprüche, wobei das das Prozess-Temperierungssystem (10) weiterhin zumindest eine Pumpe (124, 322, 326) umfasst, welche derart in das Prozess-Temperierungssystem (10) eingebunden ist, um erstes Wärmetransportfluid (112), zweites Wärmetransportfluid (312) und/oder Zwischenkreislauf-Wärmetransportfluid (212) umzuwälzen.

11. Die Folienreckanlage (1) nach einem der vorstehenden Ansprüche, wobei
der Wärmeverbraucherkreislauf (300) einen Vorlaufabschnitt (320) und einen Rücklaufabschnitt (340) umfasst, wobei die Temperaturregelungsvorrichtung (330) dazu eingerichtet ist Wärmetransportfluid des Vorlaufabschnitts (320) mit kälterem Wärmetransportfluid, beispielsweise aus dem Rücklaufabschnitt (340), zu mischen, um das zweite Wärmetransportfluid mit einer definierten Temperatur an den zumindest einen Wärmetransportfluidausgang (350) bereitzustellen, und/oder wobei
die Temperaturregelungsvorrichtung (330) dazu eingerichtet ist zumindest eine Pumpe (124, 322, 326, 331, 332, 333) des Prozess-Temperierungssystems anzusteuern, um die Fließgeschwindigkeit des entsprechenden Wärmetransportfluides in dem der Pumpe zugeordneten Kreislauf zu steuern und /oder zu regeln, um das zweite Wärmetransportfluid mit einer definierten Temperatur an den zumindest einen Wärmetransportfluidausgang (350) bereitzustellen.

12. Die Folienreckanlage (1) nach einem der vorstehenden Ansprüche, wobei das Prozess-Temperierungssystem (10) weiterhin zumindest eine Zusatzheizvorrichtung (324) umfasst, wobei die zumindest eine Zusatzheizvorrichtung (324) dem Wärmeverbraucherkreislauf (300), insbesondere dem Vorlaufabschnitt (320), und/oder dem Wärmespeicher (210) zugeordnet ist.

13. Die Folienreckanlage (1) nach einem der vorstehenden Ansprüche, wobei das Prozess-Temperierungssystem (10) weiterhin zumindest einen Vorlaufverteiler (500) umfasst, der dem Wärmetransportfluidausgang (350) nachgeschalten ist, und dazu eingerichtet ist das zweite Wärmetransportfluid an unterschiedliche Verbraucher der Folienreckanlage (1) zu verteilen.

14. Die Folienreckanlage (1) nach einem der vorstehenden Ansprüche, wobei das Prozess-Temperierungssystem (10) weiterhin zumindest einen Rücklaufsammler (400) und eine Verteilvorrichtung (342) umfasst, wobei der Rücklaufsammler das zweite Wärmetransportfluid von zumindest einem Verbraucher aufnimmt und an die Verteilvorrichtung (342) bereitstellt, wobei die Verteilvorrichtung (342) dazu eingerichtet ist, das Wärmetransportfluid an den Wärmespeicher (210), an den ersten Wärmetauscher (230) und/oder an die Temperaturregelungsvorrichtung (330) bereitzustellen.

15. Die Folienreckanlage (1) nach einem der Ansprüche 1 bis 14, wobei zumindest eine der Komponenten mit dem Wärmetransportfluidausgang (350) verbunden ist, um unmittelbar mit Wärmetransportfluid versorgt zu werden.

16. Folienreckanlage (1) nach einem der Ansprüche 1 bis 15, weiterhin umfassend zumindest eine Zusatzheizvorrichtung, wobei die Zusatzheizvorrichtung dazu eingerichtet ist zumindest eine der Komponenten (2, 3, 4, 5, 6, 7, 8) der Folienreckanlage (1) mit zusätzlicher thermischer Energie zu versorgen.

## Claims

1. A film stretching unit (1) comprising
a process temperature control system (10), as well as at least one of the following components:
a drying apparatus,
a feed hopper (2),
an extruder (3),
a blown film unit,
a chill roll (4),
a machine direction orienter (5),
a transverse direction orienter (6),
a simultaneous stretching unit,
a pull-roll device (7),
a wrapping device (8), and/or
an absorption cooling machine, wherein
the film stretching unit (1) is configured in such a way that at least one of the components is supplied with thermal energy directly or indirectly by means of the process temperature control system (10) in order to be temperature-controlled in a defined manner, and wherein the solar-thermal process temperature control system (10) comprises
at least one solar heat generator (110), which is integrated into a heat generation circuit (100), wherein the heat generation circuit (100) conveys a first heat transfer fluid;
at least one heat storage unit (210), to which thermal energy is supplied via the first heat generation circuit (100), said thermal energy having been generated by said at least one solar heat generator (110), wherein the heat storage unit (210) is configured to store the thermal energy;
at least one heat consumer circuit (300), which conveys a second heat transfer fluid (312), wherein
the heat consumer circuit (300) is connected to the heat storage unit (210) in order to be capable of drawing stored thermal energy,
at least one temperature control device (330), wherein said at least one temperature control device (330) comprises at least one heat transfer fluid outlet (350) and is configured
to supply the second heat transfer fluid at a defined temperature to said at least one heat transfer fluid outlet (350) in order to supply at least one component of a film stretching unit (1) directly or indirectly with defined temperature-controlled heat transfer fluid.

2. The film stretching unit (1) according to claim 1, wherein the process temperature control system (10) further comprises a first heat exchanger (230) that is connected between said at least one heat storage unit (210) and the heat consumer circuit (300).

3. The film stretching unit (1) according to any of the preceding claims, wherein the process temperature control system (10) further comprises a second heat exchanger (215) that is connected between said at least one heat storage unit (210) and the heat generation circuit (100).

4. The film stretching unit (1) according to claim 2 and 3, wherein the heat storage unit (210) is integrated into an intermediate circuit (200) that conveys an intermediate-circuit heat transfer fluid (212).

5. The film stretching unit (1) according to any of the preceding claims, wherein said at least one solar heat generator (110) is configured to supply the first heat transfer fluid (112) at a temperature of at least 550°C to the heat storage unit (210) or the second heat exchanger (215).

6. The film stretching unit (1) according to any of the preceding claims, wherein the first heat transfer fluid (112), the second heat transfer fluid (312) and/or the intermediate-circuit heat transfer fluid (212) is selected from the following heat transfer fluids:
water,
a thermal oil, or
a molten salt, wherein
the first heat transfer fluid (112), the second heat transfer fluid (312) and/or the intermediate-circuit heat transfer fluid (212) may differ.

7. The film stretching unit (1) according to any of the preceding claims, wherein said at least one heat storage unit (210) is configured to store a heat transfer fluid at a temperature of at least 180°C, or at least 210°C and in particular at least 240°C.

8. The film stretching unit (1) according to any of the preceding claims, wherein said at least one solar heat generator (110) comprises a linear concentrating solar power generator, in particular at least one parabolic trough collector and/or at least one Fresnel collector.

9. The film stretching unit (1) according to any of the preceding claims, wherein said at least one solar heat generator (110) is a tracking heating generator that comprises at least one single-axis tracking.

10. The film stretching unit (1) according to any of the preceding claims, wherein the process temperature control system (10) a further comprises at least one pump (124, 322, 326), which is integrated into the process temperature control system (10) in such a way to circulate the first heat transfer fluid (112), second heat transfer fluid (312) and/or intermediate-circuit heat transfer fluid (212).

11. The film stretching unit (1) according to any of the preceding claims, wherein
the heat consumer circuit (300) comprises a supply section (320) and a return section (340), wherein the temperature control device (330) is configured to mix heat transfer fluid of the supply section (320) with colder heat transfer fluid, for example from the return section (340), in order to supply the second heat transfer fluid at a defined temperature to said at least one heat transfer fluid outlet (350), and/or wherein
the temperature control device (330) is configured to activate at least one pump (124, 322, 326, 331, 332, 333) of the process temperature control system in order to control the flow velocity of the corresponding heat transfer fluid in the circuit allocated to the pump in order to supply the second heat transfer fluid at a defined temperature to said at least one heat transfer fluid outlet (350).

12. The film stretching unit (1) according to any of the preceding claims, wherein the process temperature control system (10) further comprises at least one additional heating device (324), wherein said at least one additional heating device (324) is allocated to the heat consumer circuit (300), in particular the supply section (320), and/or the heat storage unit (210).

13. The film stretching unit (1) according to any of the preceding claims, wherein the process temperature control system (10) further comprises at least one supply manifold (500) that is connected downstream of the heat transfer fluid outlet (350) and is configured to distribute the second heat transfer fluid to different consumers of the film stretching unit (1).

14. The film stretching unit (1) according to any of the preceding claims, wherein the process temperature control system (10) further comprises at least one return collector (400) and a distributing device (342), wherein the return collector (400) takes the second heat transfer fluid from at least one consumer and supplies it to the distributing device (342), wherein the distributing device (342) is configured to supply the heat transfer fluid to the heat storage unit (210), the first heat exchanger (230) and/or the temperature control device (330).

15. The Film stretching unit (1) according to any one of claims 1 to 14, wherein at least one of the components is connected to the heat transport fluid outlet (350) to be supplied directly with heat transfer fluid.

16. Film stretching unit (1) according one of the claims 1 or 15, further comprising at least one additional heating device, wherein the additional heating device is configured to supply at least one of the components (2, 3, 4, 5, 6, 7, 8) of the film stretching unit (1) with additional thermal energy.

## Revendications

1. Installation d'étirage de film (1) comprenant :
un système de contrôle de la température de process (10) ainsi qu'au moins un des composants suivants :
un dispositif de séchage ;
une trémie de remplissage (2) ;
une extrudeuse (3) ;
une ligne de gonflage ;
un rouleau de refroidissement (4) ;
une installation d'étirage longitudinal (5) ;
une installation d'étirage transversal (6) ;
un installation d'étirage simultané ;
un dispositif de retrait de film (7),
un dispositif d'enroulement (8), et/ou
un refroidisseur à absorption ; étant entendu que
l'installation d'étirage de film (1) est conçue de telle façon qu'au moins un des composants peut être alimenté en énergie thermique directement ou indirectement au moyen du système de contrôle de la température de process (10) afin d'être régulé en température d'une manière définie, et que
le système de contrôle de la température de process (10) est un système thermique solaire de contrôle de la température de process, ledit système de contrôle de la température de process (10) comprenant :
au moins un générateur solaire de chaleur (110) qui est intégré dans un circuit de génération de chaleur (100), ledit circuit de génération de chaleur (100) transportant un premier fluide caloporteur (112),
au moins un accumulateur de chaleur (210) auquel de l'énergie thermique générée par l'au moins un générateur solaire de chaleur (110) peut être fournie par le biais du premier circuit de génération de chaleur (100), ledit accumulateur de chaleur (210) étant conçu pour stocker ladite énergie thermique,
au moins un circuit consommateur de chaleur (300) qui transporte un deuxième fluide caloporteur (312), ledit circuit consommateur de chaleur (300) étant raccordé à l'accumulateur de chaleur (210) afin de pouvoir en extraire de l'énergie thermique stockée,
au moins un dispositif de régulation de température (330), ledit au moins un dispositif de régulation de température (330) comprenant au moins une sortie de fluide caloporteur (350) et étant conçu pour fournir le deuxième fluide caloporteur à une température définie à ladite au moins une sortie de fluide caloporteur (350) afin d'alimenter directement ou indirectement au moins un composant de l'installation d'étirage de film (1) en fluide caloporteur à une température définie.

2. Installation d'étirage de film (1) selon la revendication 1, dans laquelle le système de contrôle de la température de process (10) comprend en outre un premier échangeur de chaleur (230) qui est branché entre l'au moins un accumulateur de chaleur (210) et le circuit consommateur de chaleur (300).

3. Installation d'étirage de film (1) selon l'une des revendications précédentes, dans laquelle le système de contrôle de la température de process (10) comprend en outre un deuxième échangeur de chaleur (215) qui est branché entre l'au moins un accumulateur de chaleur (210) et le circuit générateur de chaleur (100).

4. Installation d'étirage de film (1) selon la revendication 2 et 3, dans laquelle l'accumulateur de chaleur (210) est intégré dans un circuit intermédiaire (200) qui transporte un fluide caloporteur de circuit intermédiaire (212).

5. Installation d'étirage de film (1) selon l'une des revendications précédentes, dans laquelle l'au moins un générateur solaire de chaleur (110) est conçu pour fournir le premier fluide caloporteur (112) à une température d'au moins 550 °C à l'accumulateur de chaleur (210) ou au deuxième échangeur de chaleur (215).

6. Installation d'étirage de film (1) selon l'une des revendications précédentes, dans laquelle le premier fluide caloporteur (112), le deuxième fluide caloporteur (312) et/ou le fluide caloporteur de circuit intermédiaire (212) sont un fluide choisi parmi les fluides caloporteurs suivants :
l'eau,
une huile thermique, et
un sel fondu, étant entendu que
le premier fluide caloporteur (112), le deuxième fluide caloporteur (312) et/ou le fluide caloporteur de circuit intermédiaire (212) peuvent être différents les uns des autres.

7. Installation d'étirage de film (1) selon l'une des revendications précédentes, dans laquelle l'au moins un accumulateur de chaleur (210) est conçu pour stocker un fluide caloporteur d'une température d'au moins 180 °C, ou d'au moins 210 °C et notamment d'au moins 240 °C.

8. Installation d'étirage de film (1) selon l'une des revendications précédentes, dans laquelle l'au moins un générateur solaire de chaleur (110) comprend un générateur solaire de chaleur à concentration linéaire, notamment au moins un collecteur à miroir parabolique et/ou au moins un collecteur de Fresnel.

9. Installation d'étirage de film (1) selon l'une des revendications précédentes, dans laquelle l'au moins un générateur solaire de chaleur (110) est un générateur de chaleur à suivi présentant au moins un suivi mono-axial.

10. Installation d'étirage de film (1) selon l'une des revendications précédentes, dans laquelle le système de contrôle de la température de process (10) comprend en outre au moins une pompe (124, 322, 326) qui est intégrée dans le système de contrôle de la température de process (10) de manière à faire circuler le premier fluide caloporteur (112), le deuxième fluide caloporteur (312) et/ou le fluide caloporteur de circuit intermédiaire (212).

11. Installation d'étirage de film (1) selon l'une des revendications précédentes, dans laquelle
le circuit consommateur de chaleur (300) comprend une section d'écoulement aller (320) et une section d'écoulement retour (340), le dispositif de régulation de température (330) étant conçu pour mélanger le fluide caloporteur de la section d'écoulement aller (320) à un fluide caloporteur plus froid, par exemple provenant de la section d'écoulement retour (340), afin de fournir le deuxième fluide caloporteur à l'au moins une sortie de fluide caloporteur (350) à une température définie, et/ou dans laquelle
le dispositif de régulation de température (330) est conçu pour commander au moins une pompe (124, 322, 326, 331, 332, 333) du système de contrôle de la température de process afin de commander et/ou de réguler le débit du fluide caloporteur correspondant dans le circuit associé à la pompe afin de fournir le deuxième fluide caloporteur à l'au moins une sortie de fluide caloporteur (350) à une température définie.

12. Installation d'étirage de film (1) selon l'une des revendications précédentes, dans laquelle le système de contrôle de la température de process (10) comprend en outre au moins un dispositif de chauffage supplémentaire (324), ledit au moins un dispositif de chauffage supplémentaire (324) étant associé au circuit consommateur de chaleur (300), notamment à la section d'écoulement aller (320), et/ou à l'accumulateur de chaleur (210).

13. Installation d'étirage de film (1) selon l'une des revendications précédentes, dans laquelle le système de contrôle de la température de process (10) comprend en outre au moins un distributeur d'écoulement aller (500) branché en aval de la sortie de fluide caloporteur (350) et conçu pour distribuer le deuxième fluide caloporteur à différents consommateurs de l'installation d'étirage de film (1).

14. Installation d'étirage de film (1) selon l'une des revendications précédentes, dans laquelle le système de contrôle de la température de process (10) comprend en outre au moins un collecteur de retour (400) et un dispositif de distribution (342), le collecteur de retour recevant le deuxième fluide caloporteur d'au moins un consommateur et le fournissant au dispositif de distribution (342), ledit dispositif de distribution (342) étant conçu pour fournir le fluide caloporteur à l'accumulateur de chaleur (210), au premier échangeur de chaleur (230) et/ou au dispositif de régulation de température (330).

15. Installation d'étirage de film (1) selon l'une des revendications 1 à 14, dans laquelle au moins un des composants est relié à la sortie de fluide caloporteur (350) pour être directement alimenté en fluide caloporteur.

16. Installation d'étirage de film (1) selon l'une des revendications 1 à 15, comprenant en outre au moins un dispositif de chauffage supplémentaire, ledit dispositif de chauffage supplémentaire étant conçu pour alimenter au moins un des composants (2, 3, 4, 5, 6, 7, 8) de l'installation d'étirage de film (1) en énergie thermique supplémentaire.
